(19) **Europäisches Patentamt / European Patent Office / Office européen des brevets**

(11) **EP 2 996 307 B1**

(12) ## EUROPÄISCHE PATENTSCHRIFT

(45) Veröffentlichungstag und Bekanntmachung des Hinweises auf die Patenterteilung:
**27.11.2019  Patentblatt 2019/48**

(51) Int Cl.:
***H04L 29/08*** *(2006.01)*

(21) Anmeldenummer: **14184182.5**

(22) Anmeldetag: **10.09.2014**

(54) **VERFAHREN ZUR ENERGIEOPTIMIERTEN DATENÜBERTRAGUNG MITTELS OPC UA PROTOKOLL**

METHOD FOR ENERGY-OPTIMISED DATA TRANSMISSION USING OPC UA PROTOCOL

PROCÉDÉ DE TRANSMISSION DE DONNÉES À ÉNERGIE OPTIMISÉE AU MOYEN DU PROTOCOLE OPC UA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.03.2016  Patentblatt 2016/11**

(73) Patentinhaber: **Siemens Aktiengesellschaft 80333 München (DE)**

(72) Erfinder:
 • **Deiretsbacher, Karl-Heinz 91090 Effeltrich (DE)**
 • **Hock, Christian 90763 Fürth (DE)**
 • **Kaefer, Gerald 81739 München (DE)**
 • **Volkmann, Frank 90475 Nürnberg (DE)**

(56) Entgegenhaltungen:
 • SHRESTHA GANESH MAN ET AL: "An optimized OPC UA transport profile to bringing Bluetooth Low Energy Device into IP networks", 2013 IEEE 18TH CONFERENCE ON EMERGING TECHNOLOGIES & FACTORY AUTOMATION (ETFA), IEEE, 10. September 2013 (2013-09-10), Seiten 1-5, XP032517072, ISSN: 1946-0740, DOI: 10.1109/ETFA.2013.6648115 [gefunden am 2013-10-24]
 • SPIESS P ET AL: "Reliable execution of business processes on dynamic networks of service-enabled devices", INDUSTRIAL INFORMATICS, 2009. INDIN 2009. 7TH IEEE INTERNATIONAL CONFERENCE ON, IEEE, PISCATAWAY, NJ, USA, 23. Juni 2009 (2009-06-23), Seiten 533-538, XP031504298, ISBN: 978-1-4244-3759-7
 • JERKER DELSING ET AL: "A migration approach towards a SOA-based next generation process control and monitoring", IECON 2011 - 37TH ANNUAL CONFERENCE ON IEEE INDUSTRIAL ELECTRONICS SOCIETY, IEEE, 7. November 2011 (2011-11-07), Seiten 4472-4477, XP032105167, DOI: 10.1109/IECON.2011.6120045 ISBN: 978-1-61284-969-0
 • OLOV SCHELEN ET AL: "A Sensor-data Acquisition Grid Architecture", NETWORKING, SENSING AND CONTROL (ICNSC), 2013 10TH IEEE INTERNATIONAL CONFERENCE ON, IEEE, 10. April 2013 (2013-04-10), Seiten 361-366, XP032431480, DOI: 10.1109/ICNSC.2013.6548764 ISBN: 978-1-4673-5198-0
 • GOPINATH RAO S ET AL: "A gateway solution for IPv6 wireless sensor networks", ULTRA MODERN TELECOMMUNICATIONS&WORKSHOPS, 2009. ICUMT '09. INTERNATIONAL CONFERENCE ON, IEEE, PISCATAWAY, NJ, USA, 12. Oktober 2009 (2009-10-12), Seiten 1-6, XP031574470, ISBN: 978-1-4244-3942-3

EP 2 996 307 B1

- FRANCIS KENDALL ET AL: "SPF-Net: A scalable protocol for flexible sensor networks", SARNOFF SYMPOSIUM, 2010 IEEE, IEEE, PISCATAWAY, NJ, USA, 12. April 2010 (2010-04-12), Seiten 1-5, XP031679307, ISBN: 978-1-4244-5592-8
- Aro ET AL: "OPC UA Sessions, Subscriptions and Timeouts | Prosys Blog and Forum", , 26. Januar 2012 (2012-01-26), XP055153741, Gefunden im Internet: URL:http://forum.prosysopc.com/2012/01/26/ jouni/opc-ua-sessions-subscriptions-and-ti meouts/ [gefunden am 2014-11-18]

**Beschreibung**

OPC UA (OPC Unified Architecture) ist ein industrielles Standardprotokoll der OPC Foundation zur hersteller-unabhängigen Kommunikation für den Austausch von Maschinendaten insbesondere in der Prozessautomatisierung.

OPC UA ist ein relativ neuer Standard, bei dem der ursprüngliche Fokus nicht auf der Steuerung einer Industrieanlage lag, sondern vielmehr beim standardisierten Informationsaustausch insbesondere zwischen Geräten unterschiedlicher Hersteller.

Inzwischen ist OPC UA auch direkt in automatisierungstechnischen Geräten integriert, sodass die Notwendigkeit zum konsistenten Schreiben von Daten entsteht.

In automatisierungstechnischen Anlagen besteht die Notwendigkeit, zwischen unterschiedlichen Geräten Prozessinformationen (wie Prozesswerte, Messwerte, Parameter, Steuerungsbefehle) auszutauschen. Hierbei ist es wichtig, dass die Informationen konsistent und fehlersicher zwischen den Teilnehmern übertragen werden. Dies ist insbesondere bei datenverändernden Aufrufen (d. h. dem Schreiben von Variablen) wichtig.

Das OPC-UA Protokoll ist in auch der Lage, über Internet Verbindungen zu kommunizieren. Im Internet herrscht die Vereinbarung, dass eine Client/Server Kommunikation immer vom Client initiiert werden muss, das heißt, dass nur der Client Anfragen an den Server stellen darf, und dann der Server auf diese Anfrage antworten darf. Das kollidiert jedoch mit der Anforderung von Automatisierungs-Anlagen, dass die Kommunikation von beiden Kommunikationspartnern jederzeit initiiert werden muss.

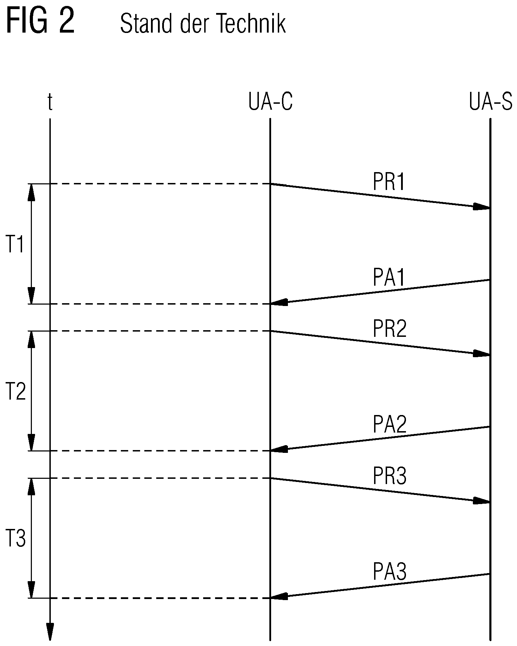

OPC-UA löst dieses Problem derzeit, indem es vorab bereits zumindest eine (oder mehrere) Anfrage vom Client an den Server sendet. Der Mechanismus ist auch in FIG 2 dargestellt. Wenn der Server (UA-S) Daten zum Client (UA-C) senden möchte, kann er dies protokollkonform tun, als Antwort auf eine dieser Anfragen. Diese Anfragen (PR1, PR2, PR3) werden "Publish-Request" genannt, die zugehörigen Antwort (PA1, PA2, PA3) "Publish-Response". In der Regel werden bis zu drei Anfragen vorgehalten. Besteht seitens des Servers eine Zeit lang kein Bedarf, Daten an den Client zu senden, so sendet er eine "leere" Antwort auch "Keep-Alive" genannt.

Empfängt der Client auf eine seiner Anfragen "Publish-Request" eine Antwort "Publish-Response", so sendet er eine neue Anfrage zum Server.

Dieser "Keep-Alive" Mechanismus ist notwendig, da der Datenverkehr im Internet durch Firewalls/Proxys und ähnliche Netzelemente überwacht wird. Diese Netzelemente schließen eine Verbindung wenn einige Zeit kein Datenverkehr (Traffic) darüber geflossen ist.

Weiterhin wird dieser Mechanismus auch dazu verwendet, die Kommunikationspartner über die ordnungsgemäße Funktion der Verbindung zu informieren.

Mit heutigen Mitteln muss mindestens alle 10 Sekunden eine Keep Alive Message versendet werden um Sender und Empfänger synchronisiert zu halten.

Es wird erst in der Zukunft vermehrt mit Verbreitung von OPC-UA und dem steigenden Einsatz von Handys und Tablets im Wartungsfall gerechnet.

Mobile Geräte kommunizieren drahtlos, über Funk wie beispielsweise Wireless LAN, Bluetooth, 3G, LTE. Da sie üblicherweise mittels einer Batterie oder einem Akku mit Strom versorgt werden und der Energiebedarf der auf dem Gerät laufenden Anwendungen sich direkt auf die Laufzeit des Gerätes auswirkt, müssen sie möglichst energieeffizient arbeiten.

Der größte Energieverbrauch bei mobilen Geräten entsteht beim Senden von Nachrichten. Daher wird die Antenne zum Senden so wenig wie möglich aktiviert. Das Empfangen ist dagegen aus Energiebilanzsicht unkritisch.

Betreibt man nun in einem mobilen Gerät eine OPC-UA Kommunikation (z. B. als mobilen Zugang zu einem Anlagenteil zum Zweck der Wartung, Überwachung, Parametrierung etc.) wird durch das auf Anfrage-Antwort (Request-Response) basierende OPC-UA eigene Kommunikationsverhalten häufig gesendet. Da das Gerät kaum in die Situation kommt den Sender abzuschalten, wird der Akku/Batterie des Gerätes sehr schnell entladen.

Das stellt insbesondere ein Problem bei Geräten dar, welche auf seltene Warnungen oder Events zeitgerecht reagieren sollen.

Bei der Definition des OPC-UA Standards wurde der Umstand der Mobilen Kommunikation nicht berücksichtigt. Mobile Endgeräte (wie z. B. MOBIC, MOBile Industrial Communicator, der Firma Siemens, ein mobiles, industrietaugliches Internet Pad für den lokalen oder weltweiten Zugang zum Intranet und Internet mit steckbaren Funkkarten und Wireless LAN), die heute bereits in Anlagen eingesetzt werden, kommunizieren über andere Protokolle.

Es gibt heute noch keine etablierte Lösung für dieses Problem. Es wird erst vermehrt in der Zukunft mit Verbreitung von OPC-UA und dem steigenden Einsatz von mobilen Endgeräten im Wartungsfall gerechnet.

In der Druckschrift "An Optimized OPC UA Transport Profile to Bringing Bluetooth Low Energy Device into IP Networks" von Ganesh Man Shresta et. al., veröffentlicht in 2013 IEEE 18th Conference on Emerging Technologies & Factory Automation (ETFA), ISSN: 1946-0740, wird das Problem von Geräten mit kleinem Energiespeicher, welche nach einem OPC-UA Protokoll kommunizieren sollen, thematisiert.

Das in der Druckschrift beschriebene Problem beschreibt Endgeräte (Server), welche die Geräte mittels Bluetooth Low Energy (BLE) Protokolls Daten übermitteln wobei die eigentlich zu übertragende Datenmenge, welche nicht in einen OPC UA Frame passt. Als Lösung wird die Optimierung eines OPC UA information models beschrieben, wobei redundante und unnötige Daten entfernt und die komprimierten Nutzdaten in einem OPC UA gespeichert werden.

Es ist Aufgabe der Erfindung, ein Verfahren anzugeben, die die oben beschriebenen Probleme behebt und eine Verwendung von mobilen Endgeräten unter dem OPC-UA Protokoll ermöglicht.

Die beschriebene Aufgabe wird gelöst durch ein Verfahren gemäß dem unabhängigen Patentanspruch 1.

Das Verfahren zur Kommunikation zwischen zumindest einem Client und zumindest einem Server eines Client/Server-Systems unter Verwendung des industriellen Kommunikationsprotokolls OPC-UA, über ein Kommunikationsnetz, welches sich dadurch auszeichnet, Anfragen nur von zumindest einem Client und darauf folgende Antworten nur von zumindest einem Server zuzulassen, und das einen sogenannten Keepalive Mechanismus umfasst, bei dem eine zwischen dem Server und dem Client bestehende Datenverbindung beendet wird, wenn in einem sogenannten Keepalive Zeitraum keine Datenpakete übertragen werden, wobei nach Ablauf des Keepalive Zeitraums bei Vorliegen einer zu übertragenden Information der Client zunächst eine erste Trigger Nachricht vom Server empfängt und daraufhin seine Anfrage an den Server verschickt.

Vorteilhafte Ausgestaltungsformen der Erfindung sind in den Unteransprüchen beschrieben.

Als besonders vorteilhaft zeichnet sich das Verfahren aus, wenn die geplante Kommunikation vom Server zum Client aus der Übertragung von genau einer OPC-UA Eventbenachrichtigung besteht. Hier wird besonders deutlich, welche Energieersparnis und somit auch Laufzeitverlängerung ohne Notwendigkeit eines Wiederaufladens der Energiespeicher erreicht werden kann, wenn das Client Gerät nicht dauerhaft eine Verbindung aufrecht erhalten muss, über die nichts gesendet wird, außer der zwischendurch notwendigen Keepalive Pakete.

Es ist vorteilhaft, dass bei Verwendung von derzeit herkömmlichen mobilen Endgeräten das unterliegende Kommunikationsnetz zumindest das Internet oder ein Mobilfunknetz gemäß einem üblichen Mobilfunk Standard, insbesondere GSM, GPRS, Edge, LTE, UMTS oder HSPA umfasst.

Wenn das unterliegende Kommunikationsnetz das Internet ist, dann wird in vorteilhafter Weise das HTTP Protokoll oder das HTTPS Tunnel Protokoll verwendet.

Der Mechanismus wird vorteilhafterweise auf Basis eines von dem unterliegenden Kommunikationsnetz realisierten Push Dienstes umgesetzt ist. Dabei kann die Kommunikation über eine Push Dienste Schnittstelle erfolgen.

Soll das Verfahren unter Verwendung des OPC-UA Republish Mechanismus zur wiederholten Anforderung eines Datenpakets mit einer eindeutigen Sequenznummer verwendet werden, dann erfolgt eine Bestätigung des Empfangs des Datenpakets mit dieser Sequenznummer nicht wobei eine nochmalige Anforderung des Datenpakets innerhalb des im OPC-UA definierten Zeitraum bis zum Verwerfen des Datenpakets beim Sender möglich ist.

Bei der in der Einführung beschriebenen Kommunikationsmechanik des OPC-UA Protokolls wurden die Bedürfnisse der WebKommunikation berücksichtigt mit einem auf dem Request-Response basierenden Mechanismus, der jedem Einsatzfall gerecht wird. Für eine beispielsweise auf TCP/IP basierte Variante von OPC-UA ist das aber nicht erforderlich.

Die erfindungsgemäße Lösung greift nun Client- und Serverseitig in den Protokoll Layer ein. Die oberen Schichten der OPC-UA Architektur bleiben dabei unverändert, damit ist das Verfahren transparent einsetzbar.

Der Austausch des Protokoll Layers ist in OPC-UA vorgesehen, somit ist die Erfindung eine Standardkonforme Erweiterung. Für die Kommunikation in kurzen Zeitintervallen bleibt alles unverändert.

Wenn ein Client Gerät aber nur bezüglich (genau) eines Ereignisses benachrichtigten werden soll, wird auf das bisherige Polling, also die periodische Abfrage mit Proxy-Server Timeoutwerten von 10-30 Sekunden, verzichtet und auf eine alternative Benachrichtigung über die dem Mobilnetzwerk inhärenten Mittel zurückgegriffen.

Diese Verfahren setzt beispielsweise auf einen Mobile Push Service, der vom Netzwerkanbieter bereit gestellt werden muss. Dieser bietet eine Service Schnittstelle an, mit der der OPC UA Server den Client, beispielsweise ein mobiles Endgerät wie ein Smartphone, den er ansprechen möchte, benachrichtigt. Im Beispiel eines Mobilfunk Netzwerkes nach dem GSM Standard bietet der GSM Anbieter hierfür einen Mobile Push Service mit einer Service Schnittstelle. Soll nun ein OPC UA Client von einem OPC UA Server aufgeweckt werden, triggert der OPC UA Server über die Push Service Serviceschnittstelle eine Nachricht an den OPC UA Client. Das wird dann beispielsweise mit einer Hidden Text Message an die Telefonnummer des mobilen Endgeräts realisiert.

Die Client Implementierung sorgt dafür, dass bei so einer Hidden Message der OPC-UA Client wieder aufgeweckt wird. Er holt er sich danach die Nachrichten oder Nachrichten vom OPC UA Server, bis er sich wieder schlafen legen kann.

Die Erfindung ist anhand der beigefügten Zeichnungen näher erläutert, in denen zeigen:

FIG 1 den Datenaustausch zwischen OPC UA Client und OPC UA Server gemäß Erfindung,

FIG 2 den Datenaustausch zwischen OPC UA Client und OPC UA Server gemäß Stand der Technik,

FIG 3 einen beispielhaften Netzaufbau mit den erfindungsgemäßen Vorrichtungen und

FIG 4 eine Berechnung des Energieverbrauchs gemäß Stand der Technik im Vergleich zur erfindungsgemäßen Lösung.

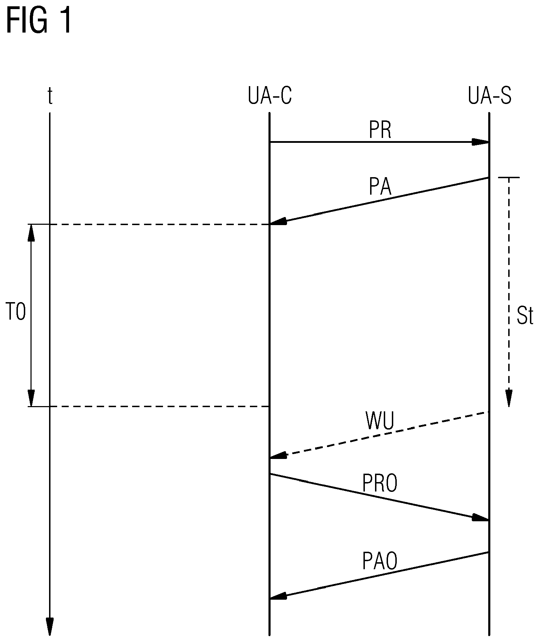

Analog zu FIG 2 ist der erfindungsgemäße Mechanismus ist in FIG 1 dargestellt. Wenn der Server (UA-S) Daten zum Client (UA-C) senden möchte, kann er dies tun, als Antwort auf eine dieser Anfragen. Diese Anfragen (PR) werden erfindungsgemäß getriggert mit einer Trigger-Nachricht (WU), insbesondere dann wenn die Keepalive Zeit (TO) bereits überschritten ist. Es ist dann nicht notwendig, den Client ständig in Sende- und Empfangsbereitschaft zu halten.

Eine beispielhafte Implementierung könnte wie folgt aussehen: Auf Clientseite UA-C werden die Anfragen PR (Publish Request) ersatzlos gestrichen. Auf Serverseite UA-S wird immer davon ausgegangen, dass eine Anfrage, Publish Request zur Verfügung steht und die entsprechende Antwort, Publish Response direkt zum Client UA-C gesendet.

Dieses neue Verhalten kann beim Verbindungsaufbau zwischen Server und Client transparent ausgehandelt werden. Hiermit wird erreicht, dass der Client im Idealfall den Sender für Datenänderungen überhaupt nicht mehr aktivieren muss, nachdem die Datenupdates konfiguriert wurden (OPC UA: CreateSubscription etc.).

Wird der (im Standard optional definierte) OPC-UA "Republish" Mechanismus vom OPC-UA Client gewünscht, so kann wie Folgt vorgegangen werden:
Die zu übertragenden Datenpakete (OPC UA Notification Messages) sind fortlaufend mit Sequenznummern nummeriert. Der Empfang der Datenpakete mit den entsprechenden Sequenznummern wird vom Empfänger nicht bestätigt. Nachrichten an den Client verfallen nach Ablauf einer Zeitspanne, so wie im Standard vorgesehen. Der OPC-UA Client kann eine Wiederholung (Republish) der Datenpakete (nur) in dieser Zeitspanne anfordern. Bei der Republish Anforderung meldet der OPC-UA Client, ab welcher Sequenznummer er die Daten erneut gesendet haben will.

In der Regel wird der Republish Mechanismus bei dem mobilen Gerät nicht verwendet. Wird er verwendet ist dies möglich, allerdings muss für den Republish der OPC-UA Client seinen Sender aktivieren.

Wird als Übertragungsprotokoll das HTTPS Tunnel Protokoll eingesetzt so gilt dasselbe wie für OPC-Binary, da der Tunnel innerhalb dasselbe Protokoll benutzt.

Wird als Übertragungsprotokoll HTTP eingesetzt dann muss das Request Response Paradigma von HTTP berücksichtig werden: Dies wird dadurch erreicht, dass es einen einzigen Publish Request gibt, auf den über "Chunked Data Encoding" mehrere Responses gesendet werden. Aus Sicht des http Protokolls handelt es sich nur eine einzige Response.

Findet eine Übertragungsüberwachung statt, muss eine Zwangstrennung/Neuverbindung auf HTTP Ebene vorgesehen werden, die sich an den Bedingungen der Überwachung orientiert. In diesem Fall muss der Sender im von der Überwachung vorgegebenen Intervall aktiviert werden, hat also zumindest bezüglich des Energieverbrauchs einen Nachteil. Im Rahmen des Einsatzes in automatisierungstechnischen Anlagen kommt dieses aber in der Regel nicht zum Tragen, da man hier die Infrastruktur unter Kontrolle hat.

Ein bevorzugter Einsatz des beanspruchten Verfahrens erfolgt zur Umsetzung einer energieeffizienten Reaktion auf Ereignisse (Events) mit typisch niedriger Kommunikations-Frequenz. OPC-UA setzt nicht auf einen Abfragemechanismus mittels "Polling" Kommunikation, sondern implementiert ein vollwertiges sogenanntes "Callback Interface". Durch intelligente Integration in den Kommunikations-Stack auf mobiler Client und Serverseite mit Hilfe eines entsprechenden Push Dienste Schnittstelle (GW) kann dies transparent für die Applikation erreicht werden.

Die Lebensdauer einer Session ist üblicherweise sehr lang, es ist daher vorteilhaft wenn die Verbindung (http/ TCP Connection) bei Bedarf wieder aufgebaut wird. Dieses Vorgehen erfolgt transparent für Applikation.

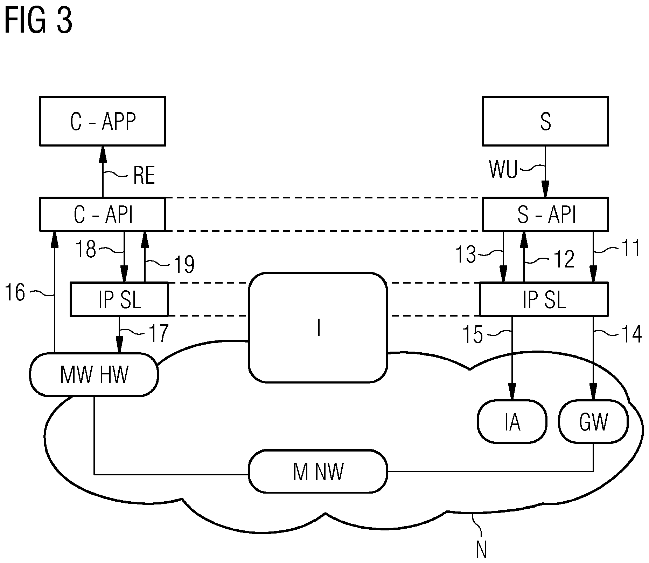

Nachfolgend wird beispielhaft die Umsetzung Server Push Pattern beschrieben, vergleiche auch nochmal die Darstellung in FIG 1 und FIG 3.

Der OPC-UA Client UA-C schickt eine Anfrage, PR0 Publish-Request, der OPC-UA Stack auf der Clientseite (bestehend aus Client APP, C-APP, OP-UA-Client API, C-API, IP Socket Layer, IP SL) puffert diese Anfrage. Der OPC-UA Server UA-S schickt bei Ereignissen eine Trigger Nachricht, WU Wake-up Message, mit der Publish-Response Information. Der OPC-UA Client-Stack schickt die Antwort Publish Response an den Client.

Im Folgenden wird als vorteilhaftes Ausführungsbeispiel in FIG 3 ein Mobiler Client C-APP, der nur zur Benachrichtigung von Störungen verwendet werden soll, beschrieben. Im Falle einer Benachrichtigung soll der Nutzer sofort auf Daten zugreifen und diese entsprechend verwenden können.

Die Kommunikation läuft über Internet I und/oder ein Mobilfunknetz M NW.

Folgende Randbedingungen gelten dabei: der Proxy "Keep-Alive" Cycle im Netz beträgt 10 Sekunden und es werden im Schnitt zwei bis drei Ereignisse pro Tag übertragen. Die Deaktivierung des Antennenteils erfolgt nach 500 Millisekunden.

Hochrechnung über den Energiebedarf:

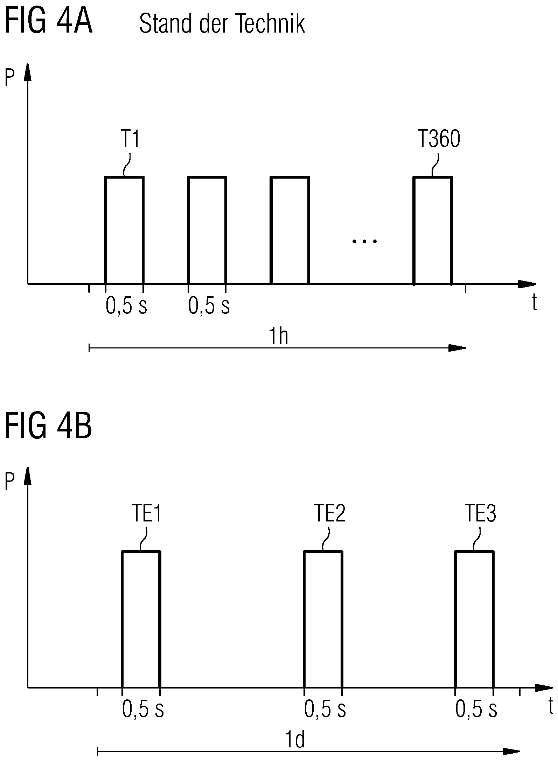

Heutige Lösung, analog Figur FIG 4A:

Der Client muss der Server 360 mal pro Stunde anfragen um zu prüfen, ob es neue Nachrichten gibt. Würde er das nicht machen, würde der Proxy-Server die Session beenden und er müsste eine komplette Session neu aufbauen.
Daraus ergibt sich als Energieverbrauch T1 ...T360 zusätzlich zu Idle Energie:
24 * 360 = 8640 Anfragen (Requests) müssen pro Tag gesendet werden.
Jedes Mal wird das Antennenteil mindestens für 0,5 Sekunden aktiviert. Als aktive Antennenzeit ergibt sich dann mindestens:

$$8640 * 0,5 \text{ Sekunden} = 4320 \text{ Sekunden} = 72 \text{ Minuten pro Tag.}$$

Vorgeschlagene Lösung im Vergleich:

3 Events ergeben 3 Wakeup Aktivitäten TE1, TE2, TE3 pro Tag Die aktive Antennenzeit beträgt daher:

$$3 * 0,5 \text{ Sekunden} = 1,5 \text{ Sekunden pro Tag.}$$

Dadurch ist nachweislich ein erhebliches Einsparpotential möglich. Die zu erwartende Verlängerung der Batterie oder Akku Laufzeit eines mobilen Endgerätes liegt im Bereich von Faktoren.
Wird das OPC-UA Protokoll ohne Änderung beispielsweise auf einem Mobilfunkgerät, oder einem vergleichbaren Gerät mit Energiespeicher, verwendet, ist eine stärkere Einbuße beim Stromverbrauch, das heißt eine Laufzeit des Gerätes von wenigen Stunden, zu erwarten, da der Sender wie oben beschrieben nahezu permanent aktiviert ist.
Das OPC-UA Protokoll sieht die Verwendung von mobilen Geräten, bei denen der Client sein Sendebedürfnis minimiert, nicht vor. Das hier beschriebene Verfahren ermöglicht eine erhebliche Energieersparnis mit minimalem Eingriff in die Kommunikationsarchitektur von OPC-UA. Dieses garantiert, dass unbedachte Seiteneffekte im Verhalten durch die Änderung nahezu ausgeschlossen sind. Das Verfahren kann als Erweiterung des Standards realisiert werden, so dass beide Kommunikationspartner sich nach wie vor standardkonform (und damit kompatibel zu Fremdgeräten) verhalten.
Ein weiterer positiver Effekt ist, dass die Verwaltung im Server und Client deutlich vereinfacht werden kann, da die komplette Verwaltung der Publish Requests entfällt.

## Patentansprüche

**1.** Verfahren zur Kommunikation zwischen zumindest einem Client (UA-C) und zumindest einem Server (UA-S) eines Client/Server-Systems unter Verwendung des Kommunikationsprotokolls OPC-UA,
über ein Kommunikationsnetz (N), welches sich dadurch auszeichnet, Anfragen (PR) nur von einem Client (UA-C) und darauf folgende Antworten (PA) nur von einem Server (UA-S) zuzulassen,
**dadurch gekennzeichnet, dass** das Kommunikationsnetz einen Keepalive Mechanismus aufweist, also eine zwischen dem Server (UA-S) und dem Client (UA-C) bestehende Datenverbindung beendet wird, wenn in einem Keepalive Zeitraum (T0) keine Datenpakete übertragen werden, wobei nach Ablauf des Keepalive Zeitraums bei Vorliegen einer zu übertragenden Information an dem Server (US-S) der Client (UA-C) eine erste Trigger Nachricht (WU) vom Server (UA-S) empfängt und daraufhin seine Anfrage (PR0) an den Server (UA-S) verschickt.

**2.** Verfahren gemäß Patentanspruch 1,
**dadurch gekennzeichnet, dass**
die Kommunikation vom Server (UA-S) zum Client (UA-C) aus der Übertragung von genau einer OPC-UA Eventbenachrichtigung besteht.

**3.** Verfahren gemäß Patentanspruch 1 oder 2,
**dadurch gekennzeichnet, dass**
das Kommunikationsnetz das Internet (I) umfasst.

**4.** Verfahren gemäß Patentanspruch 1 oder 2,
**dadurch gekennzeichnet, dass**
das Kommunikationsnetz ein Mobilfunknetz (M NW) gemäß einem üblichen Mobilfunk Standard, insbesondere GSM, GPRS, Edge, LTE, UMTS oder HSPA umfasst.

**5.** Verfahren gemäß einem der vorherigen Patentansprüche,
**dadurch gekennzeichnet, dass**
im Kommunikationsnetz das HTTP Protokoll verwendet wird.

**6.** Verfahren gemäß einem der vorherigen Patentansprüche,
**dadurch gekennzeichnet, dass**
im Kommunikationsnetz das HTTPS Tunnel Protokoll verwendet wird.

**7.** Verfahren gemäß einem der vorherigen Patentansprüche, **dadurch gekennzeichnet, dass** das Verfahren einen von dem unterliegenden Kommunikationsnetz (M NW) realisierten Push Dienstes umfasst.

**8.** Verfahren gemäß einem der vorherigen Patentansprüche,
**dadurch gekennzeichnet, dass**
die Kommunikation über eine Push Dienste Schnittstelle (GW) erfolgt.

**9.** Verfahren gemäß einem der vorherigen Patentansprüche, wobei der OPC-UA Republish Mechanismus zur wiederholten Anforderung eines Datenpakets mit einer eindeutigen Sequenznummer durch den Client (UA-C) verwendet wird
**dadurch gekennzeichnet, dass**
eine Bestätigung des Empfangs des Datenpakets mit dieser Sequenznummer durch den Client (UA-C) nicht erfolgt und eine nochmalige Anforderung des Datenpakets durch den Client (UA-C) erfolgt, innerhalb des im OPC-UA definierten Zeitraums bis zum Verwerfen des Datenpakets beim Server (UA-S).

**10.** Verwendung des Verfahrens gemäß eines der Patentansprüche 1 bis 9 in einer technischen Anlage zur Zustandsüberwachung von technischen Komponenten dieser Anlage.

**Claims**

**1.** Method for communication between at least one client (UA-C) and at least one server (UA-S) of a client/server system using the OPC UA communication protocol,
via a communication network (N) which is **characterized in that** it permits requests (PR) from one client (UA-C) only and subsequent responses (PA) from one server (UA-S) only, **characterized in that** the communication network comprises a Keep Alive mechanism, i.e. a data connection existing between the server (UA-S) and the client (UA-C) is ended if no data packets are transmitted in a Keep Alive time period (T0),
wherein on expiry of the Keep Alive time period, if information to be transmitted is present on the server (US-S), the client (UA-C) receives a first trigger message (WU) from the server (UA-S), in response to which it sends its request (PR0) to the server (UA-S).

**2.** Method according to Patent Claim 1,
**characterized in that**
the communication from the server (UA-S) to the client (UA-C) consists in the transmission of precisely one OPC UA event notification.

**3.** Method according to Patent Claim 1 or 2, **characterized in that** the communication network comprises the Internet (I).

**4.** Method according to Patent Claim 1 or 2,
**characterized in that**
the communication network comprises a mobile network (M NW) according to a conventional mobile standard, in particular GSM, GPRS, Edge, LTE, UMTS, or HSPA.

**5.** Method according to one of the preceding patent claims, **characterized in that** the HTTP protocol is used in the communication network.

**6.** Method according to one of the preceding patent claims, **characterized in that** the HTTPS Tunnel Protocol is used in the communication network.

**7.** Method according to one of the preceding patent claims, **characterized in that** the method comprises a push service provided by the underlying communication network (M NW).

**8.** Method according to one of the preceding patent claims, **characterized in that** the communication is effected via a push service interface (GW).

**9.** Method according to one of the preceding patent claims, wherein the OPC UA Republish mechanism is used for the repeated requesting of a data packet with a unique sequence number by the client (UA-C), **characterized in that** the receipt of the data packet with this sequence number by the client (UA-C) is not confirmed and a repeated data packet request by the client (UA-C) takes place, within the time period defined in the OPC-UA until the rejection of the data packet in the server (UA-S).

**10.** Use of the method according to one of Patent Claims 1 to 9 in a technical plant for the state monitoring of technical components of this plant.

**Revendications**

**1.** Procédé de communication entre au moins un client (UA-C) et au moins un serveur (UA-S) d'un système client/serveur avec utilisation du protocole de communication OPC-UA via un réseau de communication (N) qui se **caractérise par le fait que** des requêtes (PR) sont autorisées uniquement de la part d'un client (UA-C) et des réponses (PA) à ces requêtes, uniquement de la part d'un serveur (UA-S),
**caractérisé en ce que** le réseau de communication comporte un mécanisme Keepalive, c'est-à-dire qu'il est mis fin à une liaison de données existant entre le serveur (UA-S) et le client (UA-C) si aucun paquet de données n'est transmis dans une période Keepalive (T0),
le client (UA-C), au terme de la période Keepalive, en présence d'une information à transmettre au niveau du serveur (US-S), recevant un premier message de déclenchement (WU) du serveur (UA-S) et envoyant ensuite sa requête (PR0) au serveur (UA-S).

**2.** Procédé selon la revendication 1, **caractérisé en ce que** la communication du serveur (UA-S) vers le client (UA-C) consiste en la transmission d'exactement une annonce d'événement OPC-UA.

**3.** Procédé selon la revendication 1 ou 2, **caractérisé en ce que** le réseau de communication comprend l'internet (I).

**4.** Procédé selon la revendication 1 ou 2, **caractérisé en ce que** le réseau de communication comprend un réseau radio mobile (M NW) selon une norme radio mobile usuelle, en particulier GSM, GPRS, Edge, LTE, UMTS ou HSPA.

**5.** Procédé selon l'une des revendications précédentes, **caractérisé en ce qu'**est utilisé, dans le réseau de communication, le protocole HTTP.

**6.** Procédé selon l'une des revendications précédentes, **caractérisé en ce qu'**est utilisé, dans le réseau de communication, le protocole de tunnel HTTPS.

**7.** Procédé selon l'une des revendications précédentes, **caractérisé en ce que** le procédé comprend un service push réalisé par le réseau de communication sous-jacent (M NW).

**8.** Procédé selon l'une des revendications précédentes, **caractérisé en ce que** la communication a lieu via une interface de services push (GW).

**9.** Procédé selon l'une des revendications précédentes, le mécanisme Republish OPC-UA étant utilisé pour la demande répétée d'un paquet de données avec un numéro de séquence univoque par le client (UA-C), **caractérisé en ce qu'**une confirmation de la réception du paquet de données avec ce numéro de séquence par le client (UAC) n'a pas lieu et une nouvelle demande du paquet de données par le client (UA-C) a lieu dans la période définie dans l'OPC-UA jusqu'au rejet du paquet de données au niveau du serveur (UA-S).

**10.** Utilisation du procédé selon l'une des revendications 1 à 9 dans une installation technique pour la surveillance d'état de composants techniques de cette installation.

## FIG 1

# FIG 2    Stand der Technik

FIG 3

FIG 4A    Stand der Technik

FIG 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GANESH MAN SHRESTA.** An Optimized OPC UA Transport Profile to Bringing Bluetooth Low Energy Device into IP Networks. *IEEE 18th Conference on Emerging Technologies & Factory Automation (ETFA),* 2013, ISSN 1946-0740